# FASCICULE DE BREVET EUROPEEN

(11) **EP 0 786 950 B1**
(45) Date de publication et mention de la délivrance du brevet: **07.01.1999**
(21) Numéro de dépôt: 95936600.6
(22) Date de dépôt: 24.10.1995
(51) Int. Cl.: A23L 3/015, A23B 7/148

(54) **PROCEDE POUR REDUIRE LA PERTE DE POIDS DE LEGUMES APRES BLANCHIMENT ET/OU CUISSON**
VERFAHREN ZUR VERMINDERUNG DES GEWICHTSVERLUSTES VON GEMÜSE NACH DER BLEICHE UND/ODER KOCHEN
METHOD FOR REDUCING WEIGHT LOSS IN BLEACHED AND/OR COOKED VEGETABLES

(30) Priorité: 24.10.1994 FR 9412664
(43) Date de publication de la demande: 06.08.1997
(73) Titulaire: Drege, Gilles, 49000 Angers (FR)
(72) Inventeur: Drege, Gilles, 49000 Angers (FR)
(74) Mandataire: Tonnellier, Jean-Claude
(86) Numéro de dépôt international: FR9501406
(87) Numéro de publication internationale: WO9612417

(56) Documents cités:
- EP-A- 0 140 767
- EP-A- 0 197 805
- EP-A- 0 359 612

## Description

L'invention concerne un procédé de réduction de la perte de poids de légumes, après une opération de blanchiment et/ou de cuisson et/ou de stérilisation.

De telles opérations de blanchiment, cuisson ou stérilisation sont mises en oeuvre artisanalement ou industriellement pour permettre la conservation en vue d'une consommation différée. Les techniques de conservation utilisées peuvent être très variées : surgélation, pasteurisation, stérilisation, saumurage, etc.

On sait que la conservation des légumes selon l'une des techniques qui viennent d'être mentionnées nécessite diverses opérations préalables.

Il convient d'abord de nettoyer les légumes et de les mettre sous forme consommable, ce qui nécessite notamment de les éplucher et éventuellement de les découper en morceaux et/ou d'éliminer certaines parties malsaines ou mal formées, etc. Par exemple, les asperges doivent être pelées et la coupe de la base du pied doit être rafraîchie. Dans le cas des champignons, les pieds sont coupés à la hauteur voulue.

A l'issue de ces opérations, on obtient des légumes à l'état dit "paré". Ils sont prêts à subir les autres opérations nécessaires à la conservation, par exemple les opérations de blanchiment et/ou de cuisson. On rappelle que le blanchiment consiste à traiter par la chaleur les légumes parés pendant un temps court, de l'ordre de quelques minutes, le but recherché étant principalement de détruire les enzymes présentes dans les tissus végétaux et d'empêcher ainsi certaines réactions chimiques défavorables. Le blanchiment peut être effectué notamment par immersion dans l'eau à la température d'ébullition ou à une température voisine, ou encore par traitement à la vapeur d'eau, par exemple à une température de 100°C environ.

Une difficulté importante dans l'industrie de la conservation des légumes est la perte de poids que l'on observe à l'issue des opérations de blanchiment et/ou de cuisson et/ou de stérilisation. Cette perte de poids correspond à une perte d'eau et de diverses autres substances qui contribuent généralement à la valeur nutritive et/ou gustative des légumes ainsi traités. En outre, cette perte pondérale a une incidence importante sur le prix de revient des légumes de conserves, qui sont généralement vendus au poids de légumes égouttés. On appelle ici "légume de conserve" tout légume ayant subi un traitement de conservation tel que surgélation, stérilisation, saumurage, etc.

Pour éviter ces inconvénients, on a proposé jusqu'à présent divers traitements préalables d'imprégnation avec de l'eau pouvant contenir éventuellement des substances alimentaires dissoutes. Cette imprégnation est généralement effectuée sous vide afin de chasser l'air présent dans les pores des tissus végétaux et de favoriser ainsi la pénétration de l'eau ; voir par exemple le Certificat d'Addition FR-2.214.414, le document EP-A-0140767 et les documents antérieurs mentionnés dans la description de ce dernier document. Cependant, les pertes de poids après blanchiment et/ou cuisson et/ou stérilisation restent importantes.

On a également proposé, pour diminuer la perte de poids, de réaliser l'imprégnation avec divers additifs alimentaires épaississants ou coagulables par la chaleur ; voir par exemple WO-85/01420 et EP-0140767. L'utilisation dans ce but de telles substances est toutefois interdite dans de nombreux pays.

On a maintenant découvert un procédé de traitement préalable qui permet de limiter les pertes de poids après blanchiment cuisson ou stérilisation dans des proportions jamais atteintes auparavant, sans utilisation d'additifs.

La présente invention a donc pour objet un procédé de traitement de légumes, comprenant au moins une opération de conservation telle que blanchiment et/ou cuisson et/ou stérilisation, caractérisé par le fait que, dans le but de limiter la perte de poids des légumes égouttés après ladite opération, on soumet les légumes de départ, à l'état cru, lavé et paré, à un traitement préalable comprenant l'étape consistant à les faire séjourner à une température de 0°C à 25°C, dans un gaz contenant de l'oxygène à une pression partielle supérieure à la pression partielle d'oxygène de l'air à ladite température.

Le procédé de l'invention peut être appliqué par exemple à divers légumes tels que les asperges, les salsifis, les haricots verts, les endives, les coeurs de palmier, les fonds d'artichaut, et les champignons, par exemple des champignons de couche, des girolles, des cèpes, des morilles, etc.

Le gaz contenant de l'oxygène utilisé dans le procédé de l'invention peut être de l'oxygène ou de l'air, notamment à une pression inférieure ou égale à 10⁶ Pa, ou encore un mélange d'azote et d'oxygène. Pour que la pression partielle d'oxygène soit supérieure à la pression partielle de l'air, on peut soit enrichir l'air en oxygène, soit comprimer de l'air à une pression absolue au moins égale à 1,5.10⁵ Pa, et en particulier au moins égale à 3,5.10⁵ Pa.

Le procédé de traitement de l'invention peut être mis en oeuvre dans une enceinte appropriée, par exemple un récipient en acier inoxydable, capable de supporter la pression du gaz de traitement.

La température dans l'enceinte peut être par exemple de 4 à 15°C.

La pression partielle d'oxygène peut être soit uniforme soit modulée durant le traitement de l'invention, soit par variation de la pression, soit par vidange partielle de l'atmosphère gazeuse et remplacement de l'atmosphère évacuée par une atmosphère ayant une teneur différente en oxygène.

D'une façon générale, pendant le traitement de l'invention, on peut procéder une ou plusieurs fois à un remplacement total ou partiel du gaz contenu dans l'enceinte de traitement.

La durée du traitement préalable selon l'invention variera notamment selon la nature du légume traité, selon l'opération de conservation envisagée, et selon le seuil minimum de réduction de la perte de poids que l'on recherche. Cette durée du traitement préalable de l'invention peut être déterminée dans chaque cas par de simples expériences de routine.

Par exemple, on choisira pour le traitement préalable une durée suffisante pour que le rendement pondéral de transformation, exprimé en %, en produit égoutté après l'opération de conservation (blanchiment et/ou cuisson et/ou stérilisation), par rapport au produit cru et paré, est supérieur d'au moins 1 point au rendement de transformation obtenu sur des légumes de même espèce n'ayant pas subi ledit traitement préalable. On rappelle ici qu'un rendement augmente de 1 point si sa valeur, exprimée en %, augmente d'une unité en valeur absolue.

Par exemple, dans le cas de champignons de couche (Agaricus bisporus), la durée du traitement préalable peut être dans la gamme de 2 à 72 heures.

Généralement, et en particulier lorsque les légumes à traiter sont des légumes poreux, on utilisera de préférence comme légumes de départ des légumes crus et parés ayant subi un traitement d'imprégnation par un liquide aqueux, ce traitement d'imprégnation étant réalisé dans une enceinte contenant les légumes à traiter et mise sous pression réduite. Cette technique d'imprégnation est connue en soi ; voir notamment les documents de l'art antérieur cités ci-dessus.

Cette imprégnation peut être effectuée soit avec de l'eau, soit avec de l'eau contenant un agent conservateur autorisé (tel que Na₂S₂O₅), dans une enceinte mise sous vide, par exemple sous une pression inférieure à 1.300 Pa, et en particulier inférieure à 800 Pa. La température du liquide d'imprégnation est par exemple de 4°C à 15°C.

Bien entendu, le rendement de transformation est calculé par rapport au produit de départ, cru et paré, n'ayant pas encore subi le traitement d'imprégnation.

De préférence, l'enceinte dans laquelle est mis en oeuvre le procédé de traitement préalable selon l'invention est munie de moyens pour conserver une humidité relative d'au moins 95 %. En pratique, il suffit par exemple que le fond de l'enceinte contienne de l'eau en quantité suffisante pour maintenir une phase liquide pendant toute la durée du traitement préalable. De préférence, les légumes traités ne sont pas au contact de cette eau liquide. Toutefois, il est possible de prévoir différentes opérations d'aspersion intermittente des légumes durant le traitement préalable selon l'invention.

Les exemples suivants illustrent l'invention.

### EXEMPLE 1:

Dans un récipient cylindrique en acier inoxydable, relié d'une part à une pompe à vide à anneau liquide et d'autre part à un compresseur d'air, on introduit 1 kg de champignons Agaricus bisporus crus, parés. Les champignons sont maintenus dans un filet réalisé en nylon, et lavés à l'eau avant introduction dans le récipient.

On rappelle qu'un légume "paré" est un légume dont toutes les parties non comestibles, en particulier les parties terreuses, ont été éliminées.

On introduit dans le récipient, jusqu'à immersion totale des champignons, une solution aqueuse de Na₂S₂O₅ à 0,4 g/L. On abaisse la pression jusqu'à 2.000 Pa environ et maintient cette pression pendant 5 minutes.

La température à l'intérieur de l'enceinte est de 15°C.

On laisse ensuite remonter la pression jusqu'à la pression atmosphérique par introduction lente d'air, en 5 minutes environ.

On vidange la solution d'imprégnation.

Les champignons ainsi traités sont introduits dans un appareil stérilisateur muni d'une régulation de la température : appareil commercialisé sous la marque "Microflow"® par Barriquand (Roannes, France).

Après introduction des champignons, toujours maintenus dans le filet, l'appareil est relié à un compresseur d'air jusqu'à établissement d'une pression de 4,5.10⁵ Pa. On maintient cette pression pendant 24 heures puis on ramène à la pression atmosphérique par décompression lente en 5 minutes environ.

La température à l'intérieur de l'appareil a été maintenue à 9°C ± 1°C.

Les champignons sont ensuite soumis à un traitement de blanchiment dans l'eau à l'ébullition, pendant 15 minutes. Les champignons sont alors refroidis dans un bain à circulation d'eau à 15°C.

Après 10 minutes de refroidissement et égouttage, on remplit des boîtes métalliques avec 250 g de champignons. On ajoute le liquide de couverture (eau, chlorure de sodium 20 g/L, acide citrique 2 g/L). La boîte métallique est sertie sous vide dans un appareil de sertissage commercialisé par Food Machinery Corporation (Sint Niklaas, Belgique) puis les boîtes serties sont stérilisées dans un appareil de stérilisation commercialisé également par Food Machinery Corporation, à 135°C pendant 6 minutes.

On laisse refroidir pendant 48 heures puis on mesure le poids égoutté selon le mode opératoire suivant : on ouvre la boîte. On verse le contenu sur un tamis (diamètre 20 cm), à mailles de 2,5 mm. A l'aide d'une baguette de verre, on retourne les champignons dont le chapeau est ouvert pour que la partie ouverte soit en regard des mailles du tamis. On laisse égoutter 2 minutes. On prélève alors les champignons égouttés et on les pèse.

Le rendement de transformation (rapport du poids de champignons stérilisés et égouttés au poids de champignons parés de départ, exprimé en %) a été comparé avec celui obtenu sans prétraitement sous atmosphère d'air comprimé.

Dans une série de 40 expériences, les gains en rendement de transformation ont été de 6 à 8 points, en faveur du prétraitement.

Les propriétés organoleptiques de champignons obtenus avec ou sans prétraitement sont semblables.

### EXEMPLE 2:

On opère de façon analogue à celle décrite à l'exemple 1. L'appareil est relié non pas à un compresseur d'air, mais à un détendeur branché sur une bouteille d'oxygène sous pression, jusqu'à établissement d'une pression de 5.10⁵ Pa. La température à l'intérieur du récipient est maintenue à 10°C ± 1°C.

On effectue la suite des opérations décrites à l'exemple 1.

Le rendement de transformation est comparé avec celui obtenu sans le prétraitement sous atmosphère d'oxygène.

Dans une série de 20 expériences, les gains en rendement de transformation ont été de 9 à 10 points, en faveur du prétraitement.

## Revendications

1. Procédé de traitement de légumes, comprenant au moins une opération de conservation telle que blanchiment et/ou cuisson et/ou stérilisation, caractérisé par le fait que, dans le but de limiter la perte de poids des légumes égouttés après ladite opération, on soumet les légumes de départ, à l'état cru, lavé et paré, à un traitement préalable comprenant l'étape consistant à les faire séjourner à une température de 0°C à 25°C, dans un gaz contenant de l'oxygène à une pression partielle supérieure à la pression partielle d'oxygène de l'air à ladite température.

2. Procédé selon la revendication 1, caractérisé par le fait que ledit gaz est de l'air ou de l'air enrichi en oxygène.

3. Procédé selon la revendication précédente, caractérisé par le fait que ledit gaz est de l'air comprimé à une pression absolue au moins égale à 1,5.10⁵ Pa, et en particulier au moins égale à 3,5.10⁵ Pa.

4. Procédé selon la revendication précédente, caractérisé par le fait que ladite pression de l'air est inférieure ou égale à 10⁶ Pa.

5. Procédé selon la revendication 1, caractérisé par le fait que ledit gaz est de l'oxygène.

6. Procédé selon la revendication précédente, caractérisé par le fait que ledit gaz est à une pression inférieure ou égale à 10⁶ Pa.

7. Procédé selon l'une quelconque des revendications précédentes, caractérisé par le fait que ladite température est dans la gamme de 4 à 15°C.

8. Procédé selon l'une quelconque des revendications précédentes, caractérisé par le fait que la durée dudit traitement préalable est suffisante pour que le rendement pondéral de transformation, exprimé en %, en produit égoutté après ladite opération de conservation par rapport au produit cru et paré, soit supérieur d'au moins un point au rendement de transformation obtenu sur des légumes de même espèce n'ayant pas subi ledit traitement préalable.

9. Procédé selon la revendication précédente, caractérisé par le fait que la durée de traitement est dans la gamme de 2 heures à 72 heures.

10. Procédé selon l'une quelconque des revendications précédentes, caractérisé par le fait que les légumes de départ sont des légumes crus et parés ayant subi en outre un traitement d'imprégnation par un liquide aqueux réalisé dans une enceinte sous pression réduite.

11. Procédé selon l'une quelconque des revendications précédentes, caractérisé par le fait que lesdits légumes sont choisis parmi les suivants : asperges, salsifis, haricots verts, endives, coeurs de palmier, fonds d'artichaut et champignons.

## Claims

1. A method of treating vegetables, comprising at least one operation of preservation such as blanching and/or cooking and/or sterilization, characterised by the fact that with the main of limiting loss of weight in the vegetables after having been drained after the said operation, the original raw vegetables after washing and dressing are subjected to an initial treatment comprising the step consisting in making them stay at a temperature of from 0°C to 25°C in a gas containing oxygen at a partial pressure higher than the partial pressure of oxygen in air at the said temperature.

2. A method as in claim 1, characterised by the fact that the said gas is air or air enriched with oxygen.

3. A method as in the preceding claim, characterised by the fact that the said gas is air compressed to an absolute pressure at least equal to 1,5.10⁵ Pa, an in particular at least equal to 3,5.10⁵ Pa.

4. A method as in the preceding claim, characterised by the fact that the said air pressure is less than or equal to 10⁶ Pa.

5. A method as in claim 1, characterised by the fact that the said gas is oxygen.

6. A method as in the preceding claim, characterised by the fact that the said gas is at a pressure less than or equal to 10⁶ Pa.

7. A method as in any one of the preceding claims, characterised by the fact that the said temperature is in the range from 4 to 15°C.

8. A method as in any one of the preceding claims, characterised by the fact that the duration of the said initial treatment is sufficient for the efficiency of transformation expressed in % by weight of product drained after the said operation of preservation, with respect to the dressed raw product, is higher by at least one point than the efficiency of transformation obtained with vegetables of the same kind which have not been subjected to the said initial treatment.

9. A method as in the preceding claim, characterised by the fact that the duration of treatment is in the range from 2 to 72 hours.

10. A method as in any one of the preceding claims, characterised by the fact that the original vegetables are dressed raw vegetables which have in addition been subjected to a treatment of impregnation with an aqueous liquid effected in an enclosure under reduced pressure.

11. A method as in any one of the preceding claims, characterised by the fact that the said vegetables are chosen from among the following: asparagus, salsify, green beans, endive, palm hearts, artichoke bottoms and mushrooms.

## Patentansprüche

1. Verfahren zur Behandlung von Gemüse, das mindestens einen Verfahrensschritt für die Konservierung umfaßt, wie Blanchieren und/oder Kochen und/oder Sterilisieren, **dadurch gekennzeichnet**, daß zur Begrenzung des Gewichtsverlusts des abgetropften Gemüses nach einem solchen Verfahrensschritt das Gemüse zu Beginn im rohen Zustand, gewaschen und geputzt einer Vorbehandlung unterzogen wird, bei der es bei einer Temperatur von 0°C bis 25°C in einem Gas verweilt, das Sauerstoff mit einem Partialdruck über dem Partialdruck des Luftsauerstoffs bei dieser Temperatur enthält.

2. Verfahren nach Anspruch 1, **dadurch gekennzeichnet**, daß das Gas Luft oder mit Sauerstoff angereicherte Luft ist.

3. Verfahren nach dem vorhergehenden Anspruch, **dadurch gekennzeichnet**, daß das genannte Gas Preßluft mit einem absoluten Druck von mindestens gleich 1,5.10⁵ Pa ist und insbesondere mindestens gleich 3,5.10⁵ Pa.

4. Verfahren nach dem vorhergehenden Anspruch, **dadurch gekennzeichnet**, daß der genannte Luftdruck kleiner oder gleich 10⁶ Pa ist.

5. Verfahren nach Anspruch 1, **dadurch gekennzeichnet**, daß das genannte Gas Sauerstoff ist.

6. Verfahren nach dem vorhergehenden Anspruch, **dadurch gekennzeichnet**, daß das genannte Gas einen Druck kleiner oder gleich 10⁶ Pa aufweist.

7. Verfahren nach einem der vorstehenden Ansprüche, **dadurch gekennzeichnet**, daß die genannte Temperatur im Bereich von 4 bis 15° C liegt.

8. Verfahren nach einem der vorhergehenden Ansprüche, **dadurch gekennzeichnet**, daß die genannte Vorbehandlung so gewählt ist, daß die Gewichtsausbeute der Umwandlung, in Prozenten ausgedrückt, beim abgetropften Produkt nach dem Konservierungsvorgang gegenüber dem rohen und geputzten Produkt um mindestens einen Punkt höher liegt als die Ausbeute bei der Umwandlung von Gemüse gleicher Art, das dieser Vorbehandlung nicht unterzogen wurde.

9. Verfahren nach dem vorstehenden Anspruch, **dadurch gekennzeichnet**, daß die Behandlungsdauer zwischen 2 bis 72 Stunden beträgt.

10. Verfahren nach einem der vorhergehenden Ansprüche, **dadurch gekennzeichnet**, daß das Ausgangsgemüse rohes und geputztes Gemüse ist, das außerdem einer Imprägnierungsbehandlung mit einer wässrigen Lösung in einem geschlossenen Raum mit geringerem Druck unterzogen worden ist.

11. Verfahren nach einem der vorhergehenden Ansprüche, **dadurch gekennzeichnet**, daß zu den genannten Gemüsen Spargel, Schwarzwurzeln, grüne Bohnen, Chicorée, Palmenherzen, Artischockenböden und Pilze gehören.
